# EUROPEAN PATENT SPECIFICATION

(11) **EP 3 868 618 B1**
(45) Date of publication and mention of the grant of the patent: **17.12.2025**
(21) Application number: 21000042.8
(22) Date of filing: 10.02.2021
(51) Int. Cl.: B60R 25/01, B60R 25/00

(54) **A DEVICE FOR SECURING A VEHICLE AGAINST THEFT**
VORRICHTUNG ZUR SICHERUNG EINES FAHRZEUGS GEGEN DIEBSTAHL
DISPOSITIF POUR SÉCURISER UN VÉHICULE CONTRE LE VOL

(30) Priority: 18.02.2020 PL 43293520
(43) Date of publication of application: 25.08.2021
(73) Proprietor: ADS - L. Kowalik, B. Wlodarczyk - s. c. (cyvil partnership), 41-219 Sosnowiec (PL)
(72) Inventor: Kowalik, Leszek, 44-100 Gliwice (PL); Wlodarczyk, Bartlomiej, 42-436 Pilica (PL); Starosolski, Roman, 44-100 Gliwice (PL); Korban, Zygmunt, 42-674 Zboroslawice (PL)
(74) Representative: AOMB Polska Sp. z.o.o.

(56) References cited:
- WO-A1-2018/127407
- BR-A- PI0 600 870
- US-A1- 2015 061 895

## Description

An object of the invention is a device that secures a vehicle against theft.

According to the invention, the device that secures a vehicle against theft interacts with the electronic systems or controls of the vehicle.

A particular area of use of the device that secures a vehicle against theft is for vehicles advantageously equipped with an automatic transmission or electric vehicles advantageously equipped with an electronic drive mode selector, in which a change of operating state is prevented through a safety device connected to the electronic system of the vehicle. Changing the operating state of the automatic transmission, as well as changing the operating state of an electric motor controller or an electric motor inverter, prevents unauthorized starting of the electric motor and thus protects the vehicle from theft.

Known state of the art anti-theft devices for cars are used alone or in combination with an alarm system, as well as in combination with acoustic and visual signaling. These devices consist quite often of various types of mechanical locks for gear shift and brake levers and pedals, and steering locks, lockable by external and internal locks. Also known are solutions that prevent the engine from starting by interrupting the ignition circuit with relays or electromagnetic switches controlled by hidden switches, or by interrupting the fuel supply to the internal combustion engine supply system with manually or remotely controlled valves. However, the effectiveness of securing these known systems and devices against car theft is strictly dependent on unauthorized accessibility to the various security components.

There are also many known methods, especially mechanical and many different electronic systems to protect the vehicle against theft. These issues are disclosed in the state of the art in earlier patent descriptions.

From the Polish patent description no. PL 175934 entitled "A system for securing against car theft" is known for a system for protecting against theft of a car with manual or automatic transmission, which is provided with a battery-powered solenoid or solenoid valve. The system is equipped with an electronic key installed inside the gearbox housing. This electronic key differentiates at its input a preset memory code from an infrared or radio wave, the output of which for the manually controlled gearbox is connected with an electromagnet containing a pin jumper, pushed out by a spring and seated in the notches of the adjacent gearbox governors, blocking their movement. In the case of an automatic transmission, the output of the electronic key is connected to an solenoid valve, installed in the high-pressure line of the oil pump. The high-pressure line connects the valve in the solenoid valve's de-energized state to the overflow, immobilizing the planetary gear assemblies and the clutch assemblies and brakes, with the solenoid valve also mounted inside the transmission housing.

From the Polish patent description no. PL 181332 entitled "Device for securing a car against theft" is known as a device for securing a car against theft with a manually controlled gearbox. This device is an accessory patent to Polish patent no. PL 175934. The device consists of a body permanently attached to a cap on the rear part of a gearbox housing, in which a reverse gear is located. The body of the device is provided with an electronic unit which recognizes the unlocking code of the electromagnet. The jumper of this electromagnet with a fixed carrier shaft is coupled to a lever mounted pivotally on an axle, which is under the action of a return spring. The free end of this lever in the form of a clip is pressed by the return spring into the gear rim of the reverse gear when the electromagnet is de-energized.

From the Polish patent description no. PL 181348 entitled "Device for protecting a car against theft" is known as a device for protecting a car against theft with a manually or automatically controlled gearbox. This device is an accessory patent to the Polish patent no. PL 175934. The device is installed outside the casing of a conventional gearbox. A device for anti-theft protection of a car according to patent no. PL 181348 is installed in a place of housing of a gearbox, in which a conventionally sprung snap-action ball is used, fixing the position of the fifth and reverse gear governor. This device includes a body with a built-in electromagnet and with an electronic assembly that recognizes the control code of said electromagnet. The solenoid's bore is coupled to a pin which is under the action of a return spring and provided with a tappet locking lug which interacts with said springloaded ball.

From international invention application No. WO 01/15943 entitled "Anti-theft system for motor vehicles", there is known an anti-theft system electronic system comprising a locking and unlocking system and an immobilization function for a vehicle equipped with an automatic transmission. In the system, there is provided only an electrically engaged and disengaged automatic transmission actuated by an electronic automatic transmission control device and controlled by a communication link between the locking and unlocking system and the automatic transmission control device. The system is constructed of a mechanical key operated central locking system and includes an electrically engaged and deactivated transmission with an electronic transmission control device. The system also includes a communication link between the locking and unlocking system and the transmission control device, the electronic transmission control unit having a transmission control unit connected thereto, which transmission control unit on one side is introduced into a communication link between the transmission control unit to the locking and unlocking system and on the other hand communicates with the transmission control unit via a further information connection. The transmission control unit is programmed to perform an immobilization function such that the automatic transmission cannot be selected after a request for activation of the locking and unlocking system.

From international invention application No. WO 2018/127407 entitled "Vehicle entry system", a vehicle entry system is disclosed, and a passive device for authorizing entry into a vehicle and for authorizing one or more vehicle operations is disclosed. Vehicle operations include unlocking the vehicle doors. Aspects of the invention also relate to a passive vehicle entry authorization device and a method of operating a passive vehicle entry system, wherein one or more vehicle operations are authorized via the passive vehicle entry authorization device. The input device has installed inputs to receive a challenge signal from the vehicle, the processor adapted to generate a response signal to authorize vehicle operation. Outputs are also provided on the input device for outputting a response signal to the vehicle. In response to receiving a call signal from the vehicle, the processor is adapted to generate a response signal to the vehicle, allowing the vehicle to operate. A response signal is generated depending on information regarding the movement of the passive entry device, and the response signal includes information identifying the passive entry device. The invention only allows for authorized blocking of vehicle entry. The invention does scarcely block the ability to start the vehicle.

The inconvenience of known solutions is the necessity to interfere with the existing gearbox by introducing additional elements inside and/or outside the housing of the existing gearbox into their construction, and for some solutions complicated systems related to user authentication are introduced. Also inconvenient for the known solutions are complicated systems for releasing by authorization the locking of the vehicle entrance door, however they do not secure the vehicle from being started and stolen.

It is an object of the invention to develop a device for securing vehicles, including vehicles powered by internal combustion engines or vehicles powered by electric motors, against theft. It is also an object of the invention to design such a device that secures a vehicle against theft that does not interfere with the mechanical systems of an automatic transmission or with the mechanical systems of an electric motor. Accordingly, it is an object of the present invention to develop a precision functioning device for installation in a vehicle, which device will enable the automatic transmission to be secured against unauthorized shifting without reducing the life and usefulness of the automatic transmission. In vehicles powered by an electric motor, it is an objective to develop a precisely operating safety device which, when installed in a vehicle, will protect the electric motor from shifting without impairing the durability and utility of the electric motor.

The above objects are achieved with the features of claim 1.

A device that secures a vehicle against theft according to the invention is designed for vehicles powered by internal combustion engines or for vehicles powered by electric motors. A device that secures a vehicle against theft is installed inside the vehicle. A device that secures a vehicle against theft is constructed from a voltage stabilizer, which is a power supply system, from a microprocessor connected to the controller and to the transmitter-receiver and connected to the controller and the CAN network interface, which are input communication interfaces and connected to the controller and the CAN network interface, which are output communication interfaces, from a communication and signal generator and from a communication and signal filter which are connected to the microprocessor, the microprocessor being connected to a Bluetooth communication module which is communicated with a cell phone sending authorization codes.

A device that secures a vehicle against theft according to the invention via connections to "n" inputs of communication interfaces and to "m" outputs of communication interfaces is installed inside the vehicle advantageously to the data bus of the vehicle. When installed to the data bus of the vehicle, the device that secures a vehicle against theft interacts with the electronic system of the vehicle and affects the operation of the automatic transmission in vehicles driven by an internal combustion engine. The device that secures a vehicle against theft according to the invention also affects the operation of an electric motor when installed inside vehicles driven by an electric motor.

In vehicles having an automatic transmission, the automatic transmission controller and the electronic direction selector are connected to the vehicle data bus, among other things. In vehicles driven by an electric motor, an electric motor controller and an electronic direction selector, among other things, are connected to the vehicle data bus.

For vehicles equipped with an automatic transmission, the microprocessor of the device that secures a vehicle against theft via the vehicle data bus receives or sends signals from or to the vehicle controller and/or controllers via a CAN network transmitter/receiver that is coupled to the CAN network controller, including from the automatic transmission controller via a CAN network transmitter/receiver that is coupled to the CAN network controller.

For electric motor driven vehicles, the microprocessor of the device that secures a vehicle against theft via the vehicle data bus receives or sends signals from or to the vehicle controller and/or controllers via a CAN network transmitter/receiver that is coupled to the CAN network controller, including the electric motor controllers via a CAN network transmitter/receiver, that is coupled to the CAN network controller.

The communication and signal generator of the electronic gear selector/electronic direction selector and the communication and signal filter transmit and receive messages and signals to and from the microprocessor. These messages and signals are received and sent to and from the electronic gear selector or to and from the electronic direction selector via the vehicle data bus.

A device that secures a vehicle against theft protects an automatic transmission of an internal combustion engine with an electronic gear selector from unauthorized change of its operating state and does not allow a gear change to be made without authorization, thus does not allow the vehicle to be driven without prior authorization.

A device that secures a vehicle against theft - protects the electric motor of a vehicle with an electronic direction selector from its unauthorized change of operating state and does not allow the direction selector to be made without authorization, thus does not allow the vehicle to be driven without prior authorization.

Protection of the automatic transmission with the electronic gear selector and the automatic transmission controller, as well as the protection of the electronic gear selector in electric motor vehicles during lock activation, is implemented in two ways.

The first way is that the device that secures a vehicle against theft generates/simulates a continuous operation of the electronic gear selector via a message and signal generator of the electronic gear selector for one of its operating states, advantageously for a neutral state, i.e. in a position for no gear change.

A first method for vehicles driven by an electric motor comprises that the device that secures a vehicle against theft generates/simulates continuous operation of the electronic gear selector by generating messages and signals of the electronic gear selector for one of its operating states, advantageously for a neutral state, i.e. for a position for no change of direction.

A second way during activation of the locking device comprises that the device that secures the vehicle against theft actively filters, i.e. substitutes signals and messages and/or signals sent by the electronic gear selector to signals/messages as for one of its operating states, preferably the neutral state, i.e. in the no-shift position.

A second method during activation of the interlock in electric motor vehicles comprises that the device that secures a vehicle against theft actively filter, i.e. convert messages and/or signals sent by the electronic gear selector into signals/messages such as for one of its operating states, advantageously for the neutral state, i.e. in the position for no change of direction.

Advantageously, the device that secures a vehicle against theft is made of wired technology, wherein the microprocessor is connected to the communication controller(s) advantageously using digital ASICs.

Advantageously, the device that secures a vehicle against theft is made with programmable technology, wherein the microprocessor and the communication interfaces/interfaces form a System On Chip.

Advantageously, the input and output communication interfaces are those of automotive protocols such as CAN; FD-CAN; LIN; FlexRay; Ethernet and USB, among others.

Advantageously, the authorization is implemented in wireless technology. It then uses communication standards such as: RF; WiFi or BlueTooth, which communicate with the authorization device to confirm the user's identity.

Activation of the automatic transmission lock by the device that secures a vehicle against theft comprises that the automatic transmission locking device generates/simulates continuous operation of the electronic gear selector for one of its operating states, advantageously for its neutral state, for example in a position indicating no gear change.

In vehicles powered by an electric motor, the activation of the electric motor lock comprises that the device that secures a vehicle against theft generates/simulates continuous operation of the electronic gear selector for one of its operating states, advantageously for its neutral state, for example in a position indicating no change of movement direction.

The authorization codes received by the Bluetooth communication module as a signal are delivered to the microprocessor of the device that secures a vehicle against theft. This signal transmits an impulse concerning the activation of the lock operation or the deactivation of the automatic transmission lock operation.

The operation of the device that secures a vehicle against theft is accomplished by incorporating that anti-theft device into the existing vehicle data bus. Advantageously, the device that secures a vehicle against is installed between the automatic transmission controller and the other vehicle controllers. In vehicles powered by an electric motor, the device that secures a vehicle against theft is advantageously installed between the electric motor controller and the other vehicle controllers.

Activation of the automatic transmission lock by the user comprises transmitting, via a Bluetooth communication module, a signal advantageously generated in the user's cell phone to a microprocessor installed on the device that secures a vehicle against theft.

For the first method of implementing the activation of the interlock, the signal activates the message and signal generator of the electronic gear selector for one of its operating states, advantageously for the neutral state, meaning in the position for no change of gear. In vehicles driven by an electric motor, a signal advantageously generated in a cell phone activates the message and signal generator of the electronic direction selector for one of its operating states, advantageously for its neutral state, meaning in the position for no change of direction.

For the second way of realizing the activation of the interlock, the signal activates an active filter, that is, a system for converting the messages or signals sent by the electronic gear selector into signals/messages such as for one of its operating states, advantageously for its neutral state, that is, in the position for no shift. In vehicles driven by an electric motor, for the second method of implementing the activation of the interlock, a signal advantageously generated in a cell phone activates an active filter, that is, a system for converting the messages and signals sent by the electronic direction selector into signals/messages such as for one of its operating states, advantageously for its neutral state, that is, in the position of no change of direction.

When the device that secures a vehicle against theft is installed inside the vehicle, the vehicle does not indicate any malfunction during the operation of the device that secures a vehicle against theft while the automatic transmission lock and, in vehicles powered by an electric motor, the electric motor lock is active. When an automatic transmission lockout is active, there is an inability to shift gears, an inability to move the vehicle without authorization, and an inability to affect engine operation. In the case of a vehicle powered by an electric motor, when the electric motor interlock is active, the vehicle cannot change direction and cannot be driven without authorization.

In addition, the automatic transmission locking system, as well as the electric engine lock system is independent of other security systems.

Advantages of the device that secures a vehicle against theft according to the invention are that the device is easy to install, that it is small in size, that the device that secures a vehicle against theft can be hidden inside the vehicle, that it can be connected using the original connectors present in the vehicle, that there is no invasive interference with the vehicle installation, that there is no mechanical interference with the vehicle components, that there is a wide choice of user authorization methods, and that the user authorization time is short.

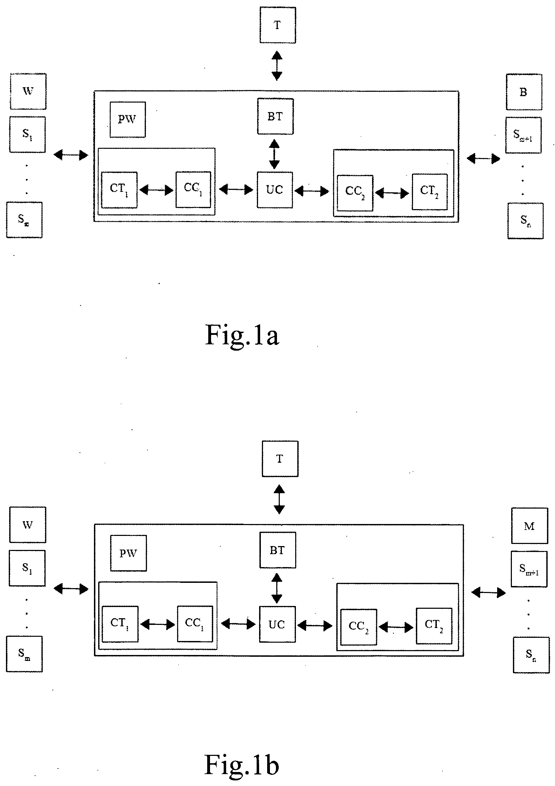

A device for securing a vehicle against theft in one example of implementation is shown in the drawing on which
- Fig.1a: shows an example diagram of the construction and connection of a device that secures a vehicle against theft for a vehicle equipped with a gearbox,
- Fig.1b: shows an example diagram of the construction and connection of a device that secures a vehicle against theft in a vehicle powered by an electric motor,

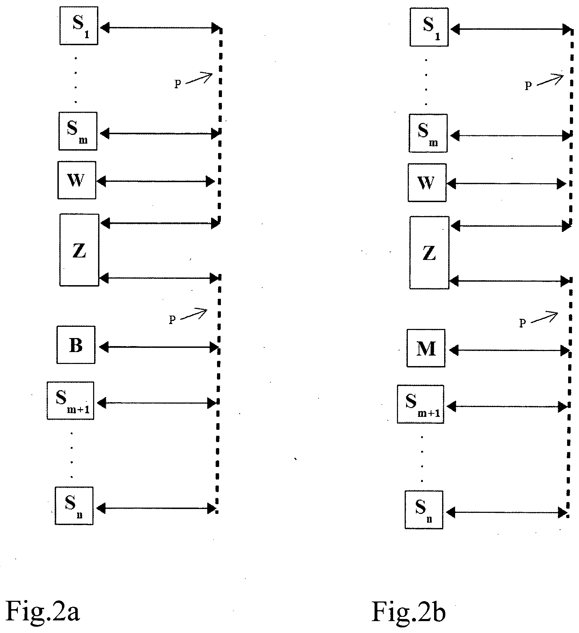

- Fig.2a: shows the general wiring diagram of the automatic transmission vehicle controllers after installing a device that secures a vehicle against theft to the vehicle data bus,
- Fig.2b: shows a general wiring diagram of the vehicle's electric motor controllers when a device that secures a vehicle against theft is installed to the vehicle's data bus,

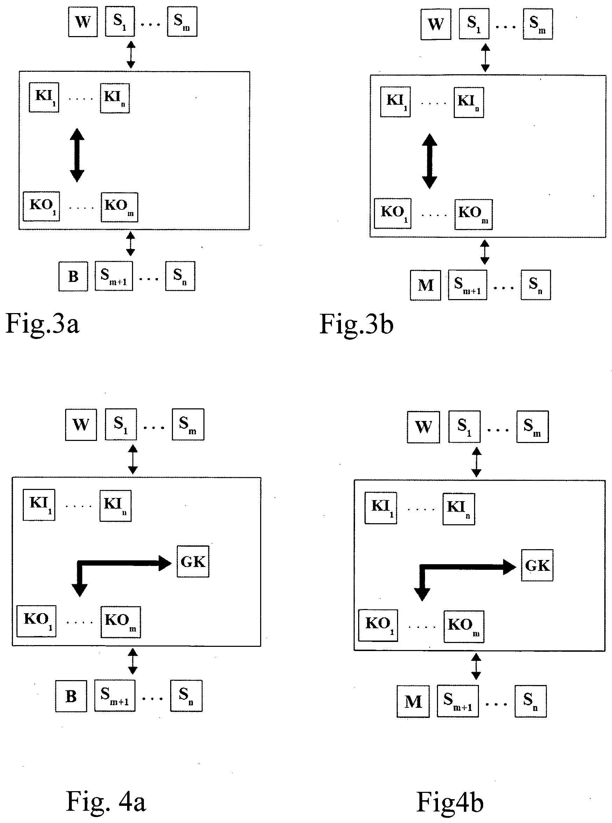

- Fig.3a: shows the communication flow of the device that secures a vehicle against theft for an unactivated automatic transmission lock,
- Fig.3b: shows the communication flow in the device that secures a vehicle against theft for an unactivated electric motor lock,
- Fig.4a: shows the communication flow in the device that secures a vehicle against theft for the activated automatic transmission protection lock after the device that secures a vehicle against theft has been installed to the vehicle data bus.
- Fig.4b: shows the communication flow of the device that secures a vehicle against theft for the activated security lock of the electronic direction selector after installation of the device that secures a vehicle against theft to the vehicle data bus,

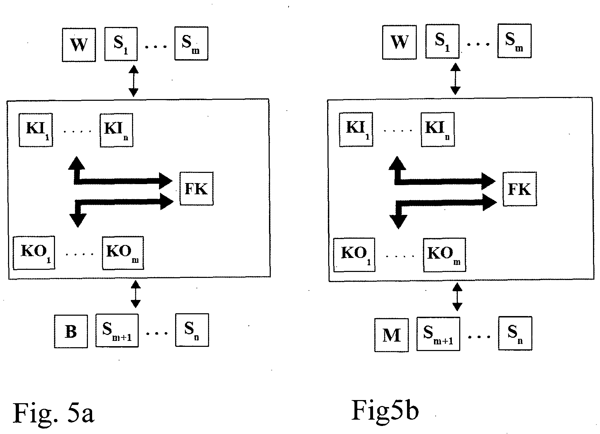

- Fig.5a: shows the communication flow in the device that secures a vehicle against theft for the activated automatic transmission protection lock after the device that secures a vehicle against theft has been installed to the vehicle data bus.
- Fig.5b: shows the communication flow in the device that secures a vehicle against theft for the activated security lock of the electronic direction selector after installation of the device that secures a vehicle against theft to the vehicle data bus.

The device that secures a vehicle against theft according to the invention is constructed from a power supply circuit **PW,** a microprocessor **UC** connected to the controller **CC₁, CC₂** and with the transmitter-receiver **CT₁, CT₂,** and with the CAN network interface, which are the communication interfaces the input from **KI₁** to **KIₙ,** with the controller and the CAN network interface, which are the output communication interfaces from **KO₁** to **KOₘ.** The device that secures a vehicle against theft has a built-in message and signal generator **GK** of the electronic gear selector and a message and signal filter **FK** of the electronic selector, which are connected to the **UC** microprocessor. The microprocessor **UC** is connected to a Bluetooth communication module **BT** that receives authorization codes sent from the cell phone **T.** The device that secures a vehicle against theft is installed to an existing vehicle data bus **P** in the vehicle. In vehicles powered by an electric motor, the device that secures a vehicle against theft is installed into an existing vehicle data bus **P.** Also connected to the data bus **P** are the vehicle controllers **S₁** to **Sₘ** and **Sₘ₊₁** to **Sₙ,** an automatic transmission controller **B** and/or an electric motor direction controller **M,** an electronic gear selector/electronic direction selector **W.**

## Claims

1. An anti-theft device (Z) for securing a vehicle against theft configured to interface with a vehicle electronics system comprising a vehicle data bus (P), vehicle controllers (S1 to Sm, Sm+1 to Sn), an automatic transmission controller (B) and an electronic gear selector (W) for vehicles powered by an internal combustion engine, an electronic drive mode selector (W) and an electric motor controller (M) for vehicles powered by an electric motor, and further configured to influence the operation of an automatic transmission in vehicles power by an internal combustion engine and to influence the operation of an electric motor in vehicles powered by an electric motor, said device (Z) comprising:
a power supply unit (PW),
a microprocessor (UC),
a message and signal generator (GK),
a message and signal filter (FK),
a Bluetooth communication module (BT) coupled to the microprocessor (UC),
a first CAN controller (CC1) and a second CAN controller (CC2) coupled to the microprocessor (UC),
a first transmitter-receiver (CT1) coupled to the first CAN controller (CC1), wherein the first transmitter-receiver (CT1) and the first CAN controller (CC1) constitute an input communication interface (KI), preferably the device comprises plurality of input communication interfaces (KI1 to KIn),
a second transmitter-receiver (CT2) coupled to the second CAN controller (CC2), wherein the second transmitter-receiver (CT2) and the second CAN controller (CC2) constitute an output communication interface (KO1), preferably the device comprises plurality of output communication interfaces (KO1 to KOm),
**characterized in that** the microprocessor is configured to:
i. generate/simulate continuous operation of the electronic gear or electronic drive mode selector (W) by the message and signal generator (GK) for one of its operating states, preferably for a neutral state, that is in a position indicating no gear change or no change of movement direction,
ii. actively filter by the message and signal filter (FK) to substitute or convert signals and messages and/or signals sent by the electronic gear or drive mode selector (W) and/or by the vehicle controllers (S1 to Sm, Sm+1 to Sn) into signals/messages for one of its operating states, preferably for a neutral state, that is in position indicating no shift or no change of direction.

2. The device (Z) according to claim 1, wherein the input and output communication interfaces (KI1 to KIn, KO1 to KOm) use communication protocols such as CAN; FD-CAN; LIN; FlexRay; Ethernet; USB, among others.

3. A vehicle with a vehicle electronics system comprising a vehicle data bus (P), vehicle controllers (S1 to Sm, Sm+1 to Sn), an automatic transmission controller (B) and an electronic gear selector (W) for vehicles powered by an internal combustion engine, an electronic drive mode selector (W) and an electric motor controller (M) for vehicles powered by an electric motor, wherein the vehicle further comprises a device (Z) according to anyone of claims 1 to 2.

4. The vehicle according to claim 3, wherein the device (Z) is connected to the vehicle data bus (P) between the electronic gear or drive mode selector (W) and the vehicle controller s(S1 to Sm), and the automatic transmission controller (B) to which the other vehicle controllers (Sm+1 to Sn) are connected on the vehicle data bus (P).

5. The vehicle according to claim 3, wherein the device (Z) is connected to the data bus (P), between the electronic gear or drive mode selector (W) and the vehicle controllers (S1 to Sm), and the electric motor controller (M) to which the other vehicle controllers (Sm+1 to Sn) are connected on the vehicle data bus (P).

6. The vehicle according to claim 3, wherein the device is configured to receive an authorization signal request from a mobile phone via wireless technology, advantageously using communication standards such as RF, WiFi, or Bluetooth, among others.

## Patentansprüche

1. Diebstahlsicherungsgerät (Z) zur Sicherung eines Fahrzeugs gegen Diebstahl, die für die Verbindung mit einem Fahrzeugelektroniksystem konfiguriert ist, das einen Fahrzeugdatenbus (P), Fahrzeugsteuerungen (S1 bis Sm, Sm+1 bis Sn), einer Automatikgetriebesteuerung (B) und einem elektronischen Gangwahlschalter (W) für Fahrzeuge mit Verbrennungsmotor, einem elektronischen Fahrmoduswahlschalter (W) und einer Elektromotorsteuerung (M) für Fahrzeuge mit Elektromotor umfasst und ferner so konfiguriert ist, dass sie den Betrieb eines Automatikgetriebes in Fahrzeugen mit Verbrennungsmotor und den Betrieb eines Elektromotors in Fahrzeugen mit Elektromotor beeinflusst, wobei das Gerät (Z) Folgendes umfasst:
eine Stromversorgungseinheit (PW),
einen Mikroprozessor (UC),
einen Nachrichten- und Signalgenerator (GK),
einen Nachrichten- und Signalfilter (FK),
ein Bluetooth-Kommunikationsmodul (BT), das mit dem Mikroprozessor (UC) gekoppelt ist,
einen ersten CAN-Controller (CC1) und einen zweiten CAN-Controller (CC2), die mit dem Mikroprozessor (UC) gekoppelt sind,
einen ersten Sender-Empfänger (CT1), der mit dem ersten CAN-Controller (CC1) gekoppelt ist, wobei der erste Sender-Empfänger (CT1) und der erste CAN-Controller (CC1) eine Eingangskommunikationsschnittstelle (KI) bilden, wobei das Gerät vorzugsweise mehrere Eingangskommunikationsschnittstellen (KI1 bis KIn) umfasst,
einen zweiten Sender-Empfänger (CT2), der mit dem zweiten CAN-Controller (CC2) gekoppelt ist, wobei der zweite Sender-Empfänger (CT2) und der zweite CAN-Controller (CC2) eine Ausgangskommunikationsschnittstelle (KO1) bilden, wobei das Gerät vorzugsweise mehrere Ausgangskommunikationsschnittstellen (KO1 bis KOm) umfasst,
**dadurch gekennzeichnet, dass** der Mikroprozessor zum Folgenden konfiguriert ist:
i. Erzeugen/Simulieren eines kontinuierlichen Betriebs des elektronischen Gang- oder elektronischen Fahrmoduswahlschalters (W) durch den Nachrichten- und Signalgenerator (GK) für einen seiner Betriebszustände, vorzugsweise für einen Neutralzustand, d. h. in einer Position, die keinen Gangwechsel oder keine Änderung der Bewegungsrichtung anzeigt,
ii. aktives Filtern durch den Nachrichten- und Signalfilter (FK), um Signale und Nachrichten und/oder Signale, die vom elektronischen Gang- oder Fahrmoduswahlschalter (W) und/oder von den Fahrzeugsteuerungen (S1 bis Sm, Sm+1 bis Sn) gesendet werden, durch Signale/Nachrichten für einen seiner Betriebszustände, vorzugsweise für einen Neutralzustand, d. h. in einer Position, die keinen Gangwechsel oder keine Richtungsänderung anzeigt, zu ersetzen oder umzuwandeln.

2. Gerät (Z) nach Anspruch 1, wobei die Eingangs- und Ausgangskommunikationsschnittstellen (KI1 bis Kln, KO1 bis KOm) Kommunikationsprotokolle wie CAN, FD-CAN, LIN, FlexRay, Ethernet, USB u. a. verwenden.

3. Fahrzeug mit einem Fahrzeugelektroniksystem, das einen Fahrzeugdatenbus (P), Fahrzeugsteuerungen (S1 bis Sm, Sm+1 bis Sn), eine Automatikgetriebesteuerung (B) und einen elektronischen Gangwahlschalter (W) für Fahrzeuge mit Verbrennungsmotor, einen elektronischen Fahrmoduswahlschalter (W) und eine Elektromotorsteuerung (M) für Fahrzeuge mit Elektromotor umfasst, wobei das Fahrzeug ferner ein Gerät (Z) gemäß einem der Ansprüche 1 bis 2 umfasst.

4. Fahrzeug gemäß Anspruch 3, wobei das Gerät (Z) mit dem Fahrzeugdatenbus (P) zwischen dem elektronischen Gang- oder Fahrmoduswahlschalter (W) und den Fahrzeugsteuerungen (S1 bis Sm) sowie der Automatikgetriebesteuerung (B), mit der die anderen Fahrzeugsteuerungen (Sm+1 bis Sn) über den Fahrzeugdatenbus (P) verbunden sind, verbunden ist.

5. Fahrzeug gemäß Anspruch 3, wobei das Gerät (Z) mit dem Datenbus (P) zwischen dem elektronischen Gang- oder Fahrmoduswahlschalter (W) und den Fahrzeugsteuerungen (S1 bis Sm) sowie der Elektromotorsteuerung (M) verbunden ist, mit der die anderen Fahrzeugsteuerungen (Sm+1 bis Sn) über den Fahrzeugdatenbus (P) verbunden sind.

6. Fahrzeug gemäß Anspruch 3, wobei das Gerät so konfiguriert ist, dass es eine Autorisierungssignalanforderung von einem Mobiltelefon über drahtlose Technologie empfängt, vorteilhafterweise unter Verwendung von Kommunikationsstandards wie RF, WiFi oder Bluetooth, unter anderem.

## Revendications

1. Un dispositif antivol (Z) destiné à sécuriser un véhicule contre le vol, configuré pour s'interfacer avec un système électronique de véhicule comprenant un bus de données de véhicule (P), des contrôleurs de véhicule (S1 à Sm, Sm+1 à Sn), un contrôleur de transmission automatique (B) et un sélecteur électronique de vitesse (W) pour les véhicules équipés d'un moteur à combustion interne, un sélecteur électronique de mode de conduite (W) et un contrôleur de moteur électrique (M) pour les véhicules équipés d'un moteur électrique, et configuré en outre pour influencer le fonctionnement d'une transmission automatique dans les véhicules équipés d'un moteur à combustion interne et pour influencer le fonctionnement d'un moteur électrique dans les véhicules équipés d'un moteur électrique, ledit dispositif (Z) comprenant :
une unité d'alimentation électrique (PW),
un microprocesseur (UC),
un générateur de messages et de signaux (GK),
un filtre de messages et de signaux (FK),
un module de communication Bluetooth (BT) couplé au microprocesseur (UC),
un premier contrôleur CAN (CC1) et un second contrôleur CAN (CC2) couplés au microprocesseur (UC),
un premier émetteur-récepteur (CT1) couplé au premier contrôleur CAN (CC1), où le premier émetteur-récepteur (CT1) et le premier contrôleur CAN (CC1) constituent une interface de communication d'entrée (KI), de préférence le dispositif comprend une pluralité d'interfaces de communication d'entrée (KI1 à KIn),
un second émetteur-récepteur (CT2) couplé au second contrôleur CAN (CC2), où le second émetteur-récepteur (CT2) et le second contrôleur CAN (CC2) constituent une interface de communication de sortie (KO1), de préférence le dispositif comprend une pluralité d'interfaces de communication de sortie (KO1 à KOm), **caractérisé en ce que** le microprocesseur est configuré pour :
i. générer/simuler le fonctionnement continu du sélecteur électronique de vitesse ou de mode de conduite (W) par le générateur de messages et de signaux (GK) pour l'un de ses états de fonctionnement, de préférence pour un état neutre, c'est-à-dire dans une position indiquant aucun changement de vitesse ou aucun changement de direction de déplacement,
ii. filtrer activement par le filtre de messages et de signaux (FK) afin de substituer ou de convertir les signaux et messages et/ou les signaux envoyés par le sélecteur électronique de vitesse ou de mode de conduite (W) et/ou par les contrôleurs de véhicule (S1 à Sm, Sm+1 à Sn) en signaux/messages pour l'un de ses états de fonctionnement, de préférence pour un état neutre, c'est-à-dire en position indiquant aucun changement de vitesse ou de direction.

2. Le dispositif (Z) selon la revendication 1, dans lequel les interfaces de communication d'entrée et de sortie (KI1 à KIn, KO1 à KOm) utilisent des protocoles de communication tels que CAN, FD-CAN, LIN, FlexRay, Ethernet, USB, entre autres.

3. Un véhicule équipé d'un système électronique comprenant un bus de données de véhicule (P), des contrôleurs de véhicule (S1 à Sm, Sm+1 à Sn), un contrôleur de transmission automatique (B) et un sélecteur électronique de vitesse (W) pour les véhicules équipés d'un moteur à combustion interne, un sélecteur électronique de mode de conduite (W) et un contrôleur de moteur électrique (M) pour les véhicules équipés d'un moteur électrique, où le véhicule comprend en outre un dispositif (Z) selon l'une quelconque des revendications 1 à 2.

4. Le véhicule selon la revendication 3, où le dispositif (Z) est relié au bus de données de véhicule (P) entre le sélecteur électronique de vitesse ou de mode de conduite (W) et les contrôleurs de véhicule (S1 à Sm), et le contrôleur de transmission automatique (B) auquel les autres contrôleurs de véhicule (Sm+1 à Sn) sont reliés sur le bus de données de véhicule (P).

5. Le véhicule selon la revendication 3, où le dispositif (Z) est relié au bus de données (P) entre le sélecteur électronique de vitesse ou de mode de conduite (W) et les contrôleurs de véhicule (S1 à Sm), et le contrôleur du moteur électrique (M) auquel les autres contrôleurs de véhicule (Sm+1 à Sn) sont reliés sur le bus de données de véhicule (P).

6. Le véhicule selon la revendication 3, où le dispositif est configuré pour recevoir une demande de signal d'autorisation provenant d'un téléphone mobile via une technologie sans fil, utilisant de préférence des normes de communication telles que RF, WiFi ou Bluetooth, entre autres.
